# EUROPÄISCHE PATENTANMELDUNG

(11) **EP 4 464 550 A1**
(43) Veröffentlichungstag der Anmeldung: **20.11.2024**
(21) Anmeldenummer: 24174786.4
(22) Anmeldetag: 08.05.2024
(51) Int. Cl.: B60N 2/16, B60N 2/50, B60N 2/52

(54) **AKTIVES FAHRZEUGSITZFEDERUNGSSYSTEM**

(30) Priorität: 15.05.2023 DE 102023112783
(71) Anmelder: GRAMMER AG, 92289 Ursensollen (DE)
(72) Erfinder: Florian, Dotzler, 92242 Hirschau (DE)
(74) Vertreter: Hannke, Christian

(57) **Zusammenfassung**

Die Erfindung betrifft ein aktives Fahrzeugsitzfederungssystem mit einem Unterteil (4) und einem Oberteil (3) eines Fahrzeugsitzes (1) und einem dazwischen angeordneten Scherengestell mit mindestens einem ersten und mindestens einem gelenkig damit verbundenen zweiten Scherenarm (5, 6), wobei zumindest der erste Scherenarm (6) mit einem ersten Ende (6a) gelenkig mit dem Oberteil (3) verbunden ist und mit einem zweiten Ende (6b) gelenkig mit dem Unterteil (4) verbunden und daran verschiebbar ist, wobei mindestens ein das zweite Ende (6b) des ersten Scherenarms (6), in Fahrzeugsitzlängsrichtung (9) gesehen, nach vorne oder hinten bewegbares Zugmittel (16) mit mindestens einer rollbaren Achse (15), die an dem zweiten Ende (6b) angeordnet ist, fest verbunden ist.

## Beschreibung

Die Erfindung betrifft ein aktives Fahrzeugsitzfederungssystem mit einem Unterteil und einem Oberteil eines Fahrzeugsitzes und einem dazwischen angeordneten Scherengestell mit mindestens einem ersten und mindestens einem gelenkig damit verbundenen zweiten Scherenarm gemäß dem Obergriff des Patentanspruches 1.

Herkömmliche Fahrzeugsitze mit Scherengestellen zwischen einem Ober- und einem Unterteil weisen in der Regel einen dazwischen angeordneten Dämpfer auf, der dazu dient, die von außen eingeleiteten Schwingungen abzudämpfen und somit Bewegungsstöße, die beispielsweise bei Durchfahren eines Schlagloches in einen derartigen Fahrzeugsitz beziehungsweise ein derartiges Fahrzeugfederungssystem eingeleitet werden, abzudämpfen und abzufangen.

Derartige Dämpfer beziehungsweise Dämpfungseinrichtungen, gegebenenfalls gekoppelt mit Luftfederungssystemen, sind jedoch in ihrer Wirkung begrenzt, da sie eine endliche Hublänge haben und abhängig von ihrer momentanen Ausfahrstellung Gefahr laufen, dass sie in einem Hubendanschlag bei Einleitung einer Schwingung in das System kommen und somit nicht mehr die Schwingung abdämpfen können.

Häufig besteht auch bei derartigen Dämpfer-Luftfeder-Fahrzeugsitzfederungssystemen das Problem, dass ein Überschwingen des Systems stattfindet, wenn eine Schwingungsanregung bei Überfahren eines Schlagloches oder Überfahren einer Erhebung von unten, also von einem Kabinenboden eines Nutzfahrzeuges, wie eines Traktors, in das Fahrzeugsitzfederungssystem eingeleitet wird, stattfindet. Ein derartiges Überschwingen hat zur Folge, dass der Dämpfer zwar die erste eingeleitete Schwingung beziehungsweise die Schwingungskraft abdämpfen kann, jedoch aufgrund des Vorhandenseins von Trägheitskräften in dem Fahrzeugsitzfederungssystem ein entgegengesetztes Ausschlagen und Überschwingen des Systems stattfinden wird und der Dämpfer an seinen Endanschlag gelangt. Die derartigen Systemen zugrunde liegenden relativ hohen Federraten über den gesamten Verlauf der Schwingung hinweg haben auch eine gewisse Eigenfrequenz des Systems zur Folge.

Demzufolge liegt der vorliegenden Erfindung die Aufgabe zugrunde, ein aktives Fahrzeugsitzfederungssystem zur Verfügung zu stellen, welches eine Reduzierung von Überschwingungsbewegungen des Systems und das mögliche Weglassen eines Dämpferelements ermöglicht.

Diese Aufgabe wird gemäß den Merkmalen des Patentanspruches 1 gelöst.

Kerngedanke der Erfindung ist es, dass bei einem aktiven Fahrzeugsitzfederungssystem mit einem Unterteil und einem Oberteil eines Fahrzeugsitzes und einem dazwischen angeordneten Scherengestell mit mindestens einem ersten und mindestens einem gelenkig damit verbundenen zweiten Scherenarm, wobei zumindest der erste Scherenarm mit einem ersten Ende gelenkig mit dem Oberteil verbunden ist und mit einem zweiten Ende gelenkig mit dem Unterteil verbunden und darin verschiebbar ist, mindestens ein das zweite Ende des ersten Scherenarms, in Fahrzeugsitzlängsrichtung gesehen, nach vorne oder hinten bewegbares Zugmittel, vorzugsweise als nach vorne oder hinten verschiebender Zahnradriemen, ausgebildet, angeordnet wird, der mit mindestens einer rollbaren Achse, die an dem zweiten Ende angeordnet ist, fest verbunden ist.

Als Zugmittel kann auch eine Steuerkette, ein Seiltrieb oder jede andere Art von Kettenantrieb oder Synchronriemen verwendet werden.

Sofern ein derartiger Zahnradriemen in seiner Bewegung über einen Motor angetrieben ist und der Zahnradriemen in sich geschlossen ist sowie eine konstante Länge aufweist, kann erreicht werden, dass der Zahnradriemen die Schwingung des Fahrzeugsitzfederungssystems ohne Zuhilfenahme von einem Dämpferelement steuert.

Der Motor, der mittels seiner Drehbewegungskraft und seines Drehmoments entgegen einer durch eine in das System eingeleitete Schwingung verursachte Bewegung des Fahrzeugsitzfederungssystems wirkt und wirken kann, zieht somit das zweite Ende von mindestens einem Scherenarm gezielt nach vorne oder nach hinten, um hierdurch eine Veränderung der Scherenarmstellung und somit eine Veränderung des Höhenabstands zwischen dem Oberteil und dem Unterteil gezielt einzustellen und gegebenenfalls mittels der Motordrehung abzubremsen. Somit wird bei Einleitung einer Schwingungsbewegung, beispielsweise von unten oder aber auch bei Belegen des Fahrzeugsitzes mittels eines Fahrers von oben eine gezielte Abdämpfung der Bewegung des Scherenarmgestells erzielt und anschließend durch eine Gegenbewegung beziehungsweise Gegendrehbewegung des Motors eine Neueinstellung des Höhenabstandes zwischen dem Oberteil und dem Unterteil bewirkt.

Der Motor kann hierfür sowohl links- als auch rechtsdrehend ausgelegt sein, und der Zahnradriemen wird an dem Motor umgelenkt. In Fahrzeugsitzlängsrichtung ist gemäß einer bevorzugten Ausführungsform der Zahnradriemen mit einem vor der rollbaren Achse angeordneten Motor hierfür verbunden. Ebenso in Fahrzeugsitzlängsrichtung gesehen ist der Zahnradriemen hierfür hinter der rollbaren Achse und hinter einem Zahnradriemen-Verbindungselement, welches für die feste Verbindung des Zahnradriemens mit der rollbaren Achse zuständig ist, mit mindestens einer Umlenkrolle verbunden und daran umgelenkt. Somit ist der Zahnradriemen vorteilhaft und bevorzugt in sich geschlossen und weist eine konstante Länge auf. Dieser Zahnradriemen wird somit bevorzugt mittels des vorne angeordneten Motors und der mindestens einen hinteren Umlenkrolle umgelenkt und kann in beide Laufrichtungen mit dem links- und rechtsdrehenden Motor bewegt werden.

Gemäß einer bevorzugten Ausführungsform sind sowohl die Umlenkrolle als auch der Motor stationär an dem Unterteil des Fahrzeugsitzes und damit des Fahrzeugsitzfederungssystems befestigt, wohingegen das Zahnradriemen-Verbindungselement fest mit der rollbaren Achse verbunden ist, die sich nach vorne und hinten abrollen beziehungsweise verschieben lässt. Hierfür kann gemäß einer bevorzugten Ausführungsform die rollbare Achse mittels des Zahnradriemens innerhalb mindestens einer Führungsschiene des Unterteils nach vorne oder nach hinten bewegt und damit gezogen werden, um einen Höhenabstand des Oberteils gegenüber dem Unterteil zu verändern.

Durch die aktive und direkte Verschiebung der Achse innerhalb der Führungsschiene des Unterteils mithilfe des Zahnradriemens und des Motors wird das gesamte Fahrzeugsitzfederungssystem gewissermaßen stabil gehalten und reduziert Überschwingungsbewegungen, wenn Schwingungsanregungen von unten oder von oben in das System eingeleitet werden. Es sind keine Trägheitskraftüberwindungen notwendig.

Eine Federrate derartiger aktiver Fahrzeugsitzfederungssysteme kann nahezu bei null liegen, wodurch nahezu keine Eigenfrequenz des Systems entstehen kann.

Hinzu kommt, dass ein derartiger links- und rechtsdrehender Motor den Zahnradriemen beliebig weit verstellen kann, wodurch die damit verbundene Achse beliebig weit nach vorne oder hinten verschoben werden kann, sofern die Führungsschiene entsprechend lang ausgebildet ist. Dies hat zur Folge, dass es - wie bei bisherigen Systemen - keine Endanschläge bei Schwingungs- und Federungsbewegungen des Systems gibt. Zudem kann der Motor entsprechend einer eingeleiteten Schwingungsbewegung und damit einer Höhenbewegung des Fahrzeugsitzes gegenbestromt werden, sodass eine Bremswirkung der Höhenbewegung mittels des Motors eintritt und somit eine Abfederung der eingeleiteten Schwingung sowie der Höhenbewegung des Fahrzeugsitzes stattfindet.

Vorteilhaft muss ein derartiger Motor geringere Reibungskräfte aufgrund der Gesamtkonstruktion überwinden. Derartige Reibungskräfte weisen maximal 120 N auf. Ein Dämpfer ist nicht mehr notwendig.

Ein derartiger Zahnradriemen sollte keinen Schlupf aufgrund einer Vorspannung aufweisen und hat bevorzugt eine konstante Länge.

Um die Größenordnung einer in das Fahrzeugsitzfederungssystem eingeleiteten Schwingung zu messen, weist das System bevorzugt eine Beschleunigungssensoreinrichtung zum Messen von Beschleunigungswerten einer von außen in das System eingeleiteten Schwingungsbewegung auf.

Zusätzlich ist gemäß einer bevorzugten Ausführungsform mindestens eine Höhensensoreinrichtung in dem Fahrzeugsitzfederungssystem angeordnet, die den Höhenabstand des Oberteils gegenüber dem Unterteil misst.

Die Bewegung des Motors, auch in Abhängigkeit der gemessenen Höhenabstandswerte und der gemessenen Beschleunigungswerte, wird mittels einer angeordneten Steuereinrichtung berechnet, gesteuert und geregelt. Die Steuereinrichtung berechnet und regelt bei Messung von Beschleunigungswerten einer in das System eingeleiteten Schwingungsbewegung eine der eingeleiteten Schwingungsbewegung entgegengesetzte Bewegungskraft durch Vorwärts- und Rückwärtsdrehung des Motors und damit ein Vorwärts- oder Rückwärtsziehen des Zahnradriemens an der rollbaren Achse, um die Scherenarmenden zusammen- oder auseinanderzuführen. Bei den Scherenarmenden kann es sich um die beiden oberen Enden, die im Oberteil des Fahrzeugsitzes angeordnet sind, oder um die beiden unteren Enden, die im Unterteil des Fahrzeugsitzes angeordnet sind, handeln. Bei den beiden Scherenarmenden ist gemäß einer bevorzugten Ausführungsform eines der Enden mittels eines Festlagers an dem Ober- beziehungsweise dem Unterteil angeordnet und das zweite Ende des anderen Scherenarmes mit einem Loslager verschiebbar beziehungsweise rollbar an dem Oberteil oder dem Unterteil positioniert.

Eine Luftfeder, die zwischen dem Ober- und dem Unterteil angeordnet ist und ein Hauptvolumen aufweist, sollte mit einem zu- oder abschaltbaren Zusatzvolumen von vorzugsweise 0,5-1,2 Liter, besonders bevorzugt von 0,9 Liter ausgestattet sein. Dies hat vorteilhaft zur Folge, dass bei einem Kraft-Weg-Diagramm, welches die Federkennlinie des Fahrzeugsitzfederungssystems widerspiegelt, die Kennlinie in ihrem mittleren Bereich über nahezu die gesamte Breite, welches den Höhenabstandsweg repräsentiert, nahezu keine Steigung aufweist, also eine Steigung von null darstellt. Die Federkennlinie wird also derart flach, dass ein Aktuator, repräsentiert durch den Motor zusammen mit dem Zahnradriemen, bei jeder Höhenposition des Fahrzeugsitzes nur noch eine geringe Reibungskraft, vorzugsweise von 50-200 N, besonders bevorzugt von 100-120 N, zusätzlich aufbringen beziehungsweise überwinden muss. Denn die Höhenposition des Fahrzeugsitzes verursacht aufgrund der nahezu nicht vorhandenen Steigung der besagten Federkennlinie keinen zusätzlichen Kraftaufwand. Hierdurch kann durch eine wenig aufwendige Gegenbestromung beziehungsweise initiierte Gegendrehung oder Abbremsung der Drehbewegung des Motors eine zusätzliche Schwingungsdämpfung des gesamten Fahrzeugsitzfederungssystems erhalten werden.

Weitere Vorteile und bevorzugte Ausführungsformen ergeben sich aus den Unteransprüchen.

Die nachfolgenden Figuren zeigen:
- Fig. 1: in einer seitlichen Querschnittsdarstellung ein erfindungsgemäßes Fahrzeugsitzfederungssystem mit einem Fahrzeugsitz in einer ersten Höhenposition;
- Fig.2: in einer seitlichen Querschnittsdarstellung das Fahrzeugsitzfederungssystem gemäß Fig.1 in einer zweiten Höhenposition;
- Fig.3: in einer Ausschnittsdarstellung einen Motor und einen Zahnradriemen zum Antrieb des aktiven Fahrzeugsitzfederungssystems gemäß der vorliegenden Erfindung; und
- Fig.4: eine Federkennlinie des erfindungsgemäßen Fahrzeugsitzfederungssystems.

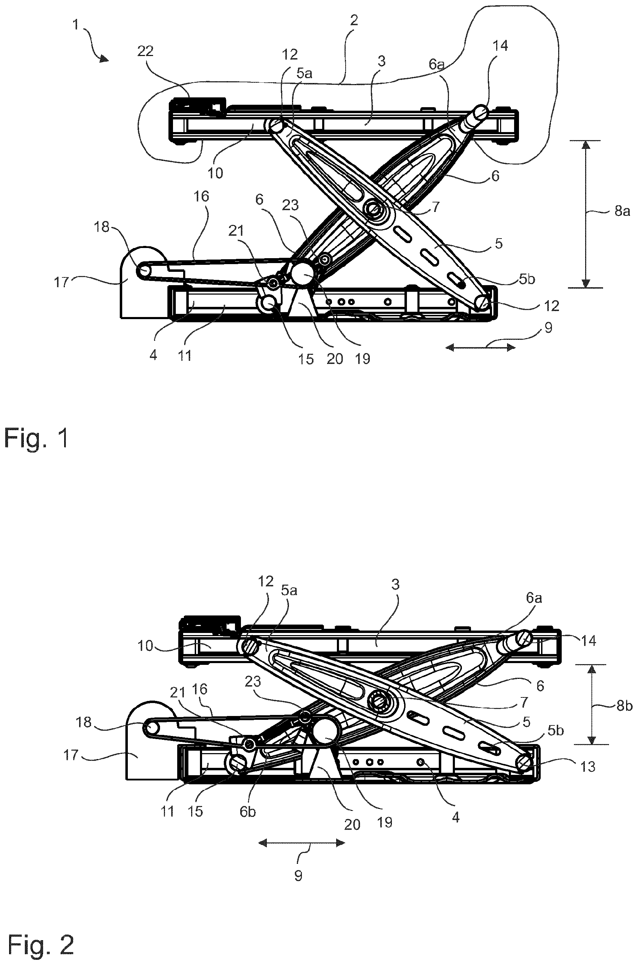

In Fig.1 ist ein erfindungsgemäßes Fahrzeugsitzfederungssystem in einer ersten Höhenposition dargestellt. Das aktive Fahrzeugsitzfederungssystem weist einen Fahrzeugsitz 1 auf, der oberseitig ein nur angedeutetes Sitzpolster 2 umfasst.

Das Sitzpolster 2 ist auf einem Oberteil 3 angeordnet, welches höhenbeweglich zu einem Unterteil 4 mittels dazwischen angeordneter Scherenarme 5 und 6 positioniert ist.

Die Scherenarme 5 und 6 sind mittels einer vorzugsweise mittig angeordneten Gelenkverbindung 7 drehbar miteinander verbunden.

Ein erster Scherenarm 6 weist ein oberes erstes Ende 6a und ein unteres zweites Ende 6b auf. Das erste Ende 6a ist mittels einer festen Gelenkverbindung 14 an dem Oberteil 3 befestigt. Das zweite Ende 6b ist mittels eines verschiebbaren beziehungsweise rollbaren Loslagers 15 innerhalb einer Führungsschiene 11 des Unterteils 4 angeordnet.

Bei dem zweiten Scherenarm 5 ist das obere erste Ende 5a als verschiebbares Loslager 12 innerhalb einer Führungsschiene 10 des Oberteils 3 positioniert. Das zweite Ende 5b des Scherenarmes 5 ist mittels eines unteren Festlagers 13 gelenkig mit dem Unterteil 4 verbunden. Das an dem ersten Ende 5a angeordnete Loslager weist eine Achse 12 auf.

Das Oberteil ist gegenüber dem Unterteil mit einem Höhenabstand 8a in einer in dieser Darstellung wiedergegebenen ersten Position eingestellt.

Das an dem zweiten Ende 6b des ersten Scherenarmes 6 im unteren Bereich angeordnete Loslager mit der rollbaren Achse 15 kann gemäß dem Doppelpfeil 9 innerhalb der Führungsschiene 11 nach vorne und nach hinten bewegt werden. Die rollbare Achse 15 ist mit einem im Wesentlichen horizontal verlaufenden Zahnradriemen 16 verbunden, der in sich geschlossen ist und eine konstante Länge aufweist. Dieser Zahnradriemen 16 wird über eine Umlenkrolle 19, die mittels eines Sockels 20 fest und stationär mit dem Unterteil verbunden ist, und einer Umlenkrolle 18, die an einem Motor angeordnet ist, umgelenkt. Der Motor 17 ist ebenso fest und stationär gegenüber dem Unterteil angeordnet und kann mit diesem verbunden sein.

Wird nun der Zahnradriemen 16 nach vorne und/oder hinten bewegt, indem der Motor 17 eine Links- oder Rechtsdrehung durchführt, so wird ein mit dem Zahnradriemen festverbundenes Zahnradriemen-Verbindungselement 21 ebenso nach vorne oder hinten bewegt. Dieses Zahnradriemen-Verbindungselement 21 ist stationär und fest mit der rollbaren Achse 15 verbunden, sodass bei Bewegung des Zahnradriemen-Verbindungselements 21 ebenso eine Bewegung der rollbaren Achse 15 stattfindet.

Somit wird aufgrund des Motorantriebs eine gezielte Bewegung der rollbaren Achse 15 entweder nach vorne oder nach hinten erreicht, indem der Motor sich entweder linksherum oder rechtsherum dreht. Solange innerhalb der Führungsschiene 11 nicht ihr Endanschlag erreicht wird, welches aufgrund einer entsprechend langen Ausbildung der Führungsschiene nicht unerwünscht vorzeitig geschieht, wird hierdurch ein Zusammenführen der unteren Enden 6b und 5b der beiden Scherenarme 6 und 5 oder ein Auseinanderführen erhalten. Dies hat, wie bei einem Vergleich der beiden Figuren 1 und 2 ersichtlich, eine Höhenverstellung des Oberteils gegenüber dem Unterteil zur Folge. Dies kann aufgrund eines Vergleichs der beiden Höhenabstände 8a und 8b erkannt werden.

Die in Fig.2 wiedergegebene Höhenposition des Fahrzeugsitzfederungssystems ist eine niedrigere als die in Fig.1 wiedergegebene Höhenposition. Wenn bei einer Einleitung einer externen Schwingungsbewegung von unten in das Fahrzeugsitzfederungssystem gewünscht wird, dass das Oberteil 3 auf gleicher Höhe verbleibt, obgleich das Unterteil aufgrund der eingeleiteten Schwingungsbewegung nach oben bewegt wird, so wird diese Bewegung durch den Zahnradriemen 16 und die Drehbewegung des Motors 17 mitbegleitet und gezielt durch eine Drehmomentsbeaufschlagung des Motors 17 abgebremst und somit die eingeleitete Schwingungsbewegung abgefedert. Ein üblicherweise anschließendes Nachobenschwingen des Oberteils 3, nachdem das Unterteil 4 wieder nach erfolgter Überfahrung einer Erhebung nach unten schwingen kann, kann durch ein gezieltes Regeln der Verschiebe- beziehungsweise Rollbewegung der Achse 15 nach vorne oder hinten verhindert werden. Somit wird keine Überschwingungsbewegung erhalten.

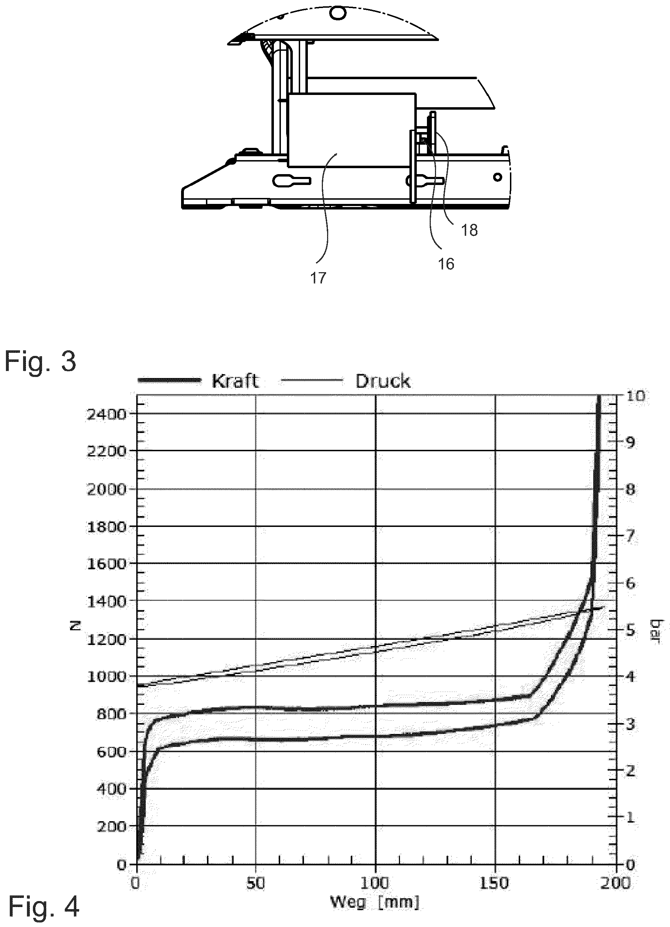

In Fig.3 ist in einer Ausschnittsdarstellung der bereits erwähnte Motor 17 mit dem Zahnradriemen 16 und der Umlenkrolle 18 in einer Vorderansicht dargestellt. Dieser Darstellung ist zu entnehmen, dass der Motor fest mit dem Unterteil 4 oder fest gegenüber einem Karosserieboden angeordnet ist.

Um die bereits beschriebenen Höhenbewegungen beziehungsweise Schwingungsbewegung des erfindungsgemäßen Fahrzeugsitzfederungssystems gezielt zu steuern und den Motor mit seiner Links- oder Rechtsdrehung sowohl in der Geschwindigkeit als auch in der Beschleunigungsbewegung zu regeln, weist das erfindungsgemäße Fahrzeugsitzfederungssystem eine Steuerungseinrichtung 22 auf.

Die Steuerungseinrichtung umfasst mindestens eine Beschleunigungssensoreinrichtung zum Messen von Beschleunigungswerten einer von außen in das System eingeleiteten Schwingungsbewegung. Bei einer derartigen Schwingungsbewegung kann es sich sowohl um eine von unten eingeleitete Schwingungsbewegung aufgrund eines Durchfahrens eines Schlagloches oder einer Erhebung als auch um eine von oben eingeleitete Schwingungsbewegung aufgrund einer Neubesetzung des Fahrzeugsitzes mit einem Fahrer handeln.

Eine zusätzlich angeordnete Höhensensoreinrichtung 23 misst den Höhenabstand 8a, 8b des Oberteils 3 gegenüber dem Unterteil 4.

Die Steuerungseinrichtung berechnet und regelt nun die bei Messung von Beschleunigungswerten einer in das System eingeleiteten Schwingungsbewegung eine der eingeleiteten Schwingungsbewegung entgegengesetzte Bewegungskraft durch Vorwärts- und Rückwärtsdrehung des Motors und damit ein Vorwärts- oder Rückwärtsziehen des Zahnradriemens an der Achse, die vorzugsweise eine rollbare Achse ist, um die Scherenarmenden 5b, 6b zusammen- oder auseinanderzuführen. Hierdurch wird der Höhenabstand 8a, 8b zwischen dem Oberteil 3 und dem Unterteil 4 verändert und kann gezielt derart gesteuert werden, dass das Oberteil 3 in Relation zu der wirklichen Sitzhöhe des Fahrers auf dem gleichen Niveau verbleibt.

In Fig.4 ist in einer Federkennlinie gezeigt, dass bei Vorhandensein einer Luftfeder, die in den Darstellungen nicht wiedergegeben ist, zusammen mit einem Zusatzvolumen von beispielsweise 0,9 Liter die Kennlinie derart flach im mittleren Bereich wird, dass der Motor 17 zusammen mit dem Zahnradriemen 13 bei jeder Höhenposition des Oberteils 3 gegenüber dem Unterteil 4 nur circa 100-120 N an Reibungskraft überwinden muss. Diese geringe Reibungskraft wird überwunden, um in diesem Bereich zwar eine Dämpfungswirkung des gesamten Federungssystems zu erhalten, jedoch dies ohne großen Kraftaufwand innerhalb dieses Bereiches mit einer nahezu nicht vorhandenen Steigung der Federkennlinie zu bewirken.

Sämtliche Merkmale werden als vorteilhaft und als bevorzugte Ausführungsformen angesehen.

### Bezugszeichenliste

- 1: Fahrzeugsitz
- 2: Sitzpolster
- 3: Oberteil
- 4: Unterteil
- 5: zweiter Scherenarm
- 5a: oberes erstes Ende
- 5b: unteres zweites Ende 5b
- 6: erster Scherenarm
- 6a: oberes erstes Ende
- 6b: unteres zweites Ende
- 7: Gelenkverbindung
- 8a: Höhenabstand
- 8b: Höhenabstand
- 9: Fahrzeugsitzlängsrichtung / Doppelpfeil
- 10: Führungsschiene
- 11: Führungsschiene
- 12: Loslager / Achse
- 13: unteres Festlager
- 14: feste Gelenkverbindung
- 15: rollbare Achse / Loslager
- 16: Zahnradriemen; Zugmittel
- 17: Motor
- 18: Umlenkrolle
- 19: Umlenkrolle
- 20: Sockel
- 21: Zahnradriemen-Verbindungselement
- 22: Beschleunigungssensoreinrichtung
- 23: Höhensensoreinrichtung

## Patentansprüche

1. Aktives Fahrzeugsitzfederungssystem mit einem Unterteil (4) und einem Oberteil (3) eines Fahrzeugsitzes (1) und einem dazwischen angeordneten Scherengestell mit mindestens einem ersten und mindestens einem gelenkig damit verbundenen zweiten Scherenarm (5, 6), wobei zumindest der erste Scherenarm (6) mit einem ersten Ende (6a) gelenkig mit dem Oberteil (3) verbunden ist und mit einem zweiten Ende (6b) gelenkig mit dem Unterteil (4) verbunden und daran verschiebbar ist,
**dadurch gekennzeichnet, dass**
mindestens ein das zweite Ende (6b) des ersten Scherenarms (6), in Fahrzeugsitzlängsrichtung (9) gesehen, nach vorne oder hinten bewegbares Zugmittel (16) mit mindestens einer rollbaren Achse (15), die an dem zweiten Ende (6b) angeordnet ist, fest verbunden ist.

2. Fahrzeugsitzfederungssystem nach Anspruch 1,
**dadurch gekennzeichnet, dass**
das Zugmittel, vorzugsweise als Zahnradriemen (16) ausgebildet, in seiner Bewegung über einen Motor (17) angetrieben ist.

3. Fahrzeugsitzfederungssystem nach Anspruch 1 oder 2,
**dadurch gekennzeichnet, dass**
das Zugmittel, vorzugsweise als Zahnradriemen (16) ausgebildet, in sich geschlossen ist und eine konstante Länge aufweist.

4. Fahrzeugsitzfederungssystem nach Anspruch 3,
**dadurch gekennzeichnet, dass**
das Zugmittel als Zahnradriemen (16), in Fahrzeugsitzlängsrichtung (9) gesehen, vor der rollbaren Achse (15) und vor einem Zahnradriemen-Verbindungselement (21) am Motor (17) und hinter dem Zahnradriemen-Verbindungselement (21) mit mindestens einer Umlenkrolle (19) umgelenkt wird.

5. Fahrzeugsitzfederungssystem nach Anspruch 4,
**dadurch gekennzeichnet, dass**
die Umlenkrolle (19) und der Motor (17) stationär an dem Unterteil (4) befestigt sind.

6. Fahrzeugsitzfederungssystem nach einem der Ansprüche 3-5,
**dadurch gekennzeichnet, dass**
bei Antrieb des Zahnradriemens (16) mittels des Motors (17) die rollbare Achse (15) innerhalb mindestens einer Führungsschiene (11) des Unterteils (4) nach vorne oder hinten gezogen wird, um einen Höhenabstand (8a, 8b) des Oberteils (3) gegenüber dem Unterteil (4) zu verändern.

7. Fahrzeugsitzfederungssystem nach einem der vorangegangenen Ansprüche,
**gekennzeichnet durch**
mindestens eine Höhensensoreinrichtung (23), die den Höhenabstand (8a, 8b) des Oberteils (3) gegenüber dem Unterteil (4) misst.

8. Fahrzeugsitzfederungssystem nach einem der vorangegangenen Ansprüche,
**gekennzeichnet durch**
mindestens eine Beschleunigungssensoreinrichtung (22) zum Messen von Beschleunigungswerten einer von außen in das System eingeleiteten Schwingungsbewegung.

9. Fahrzeugsitzfederungssystem nach einem der vorangegangenen Ansprüche,
**gekennzeichnet durch**
eine Steuereinrichtung (22), die bei Messung von Beschleunigungswerten einer in das System eingeleiteten Schwingungsbewegung eine der eingeleiteten Schwingungsbewegung entgegengesetzte Bewegungskraft durch Vorwärts- oder Rückwärtsdrehung des Motors (17) und damit ein Vorwärts- oder Rückwärtsziehen des Zahnradriemens (16) an der rollbaren Achse (15), um die Scherenarmenden (5b, 6b) zusammen- oder auseinanderzuführen, berechnet und regelt.

10. Fahrzeugsitzfederungssystem nach einem der vorangegangenen Ansprüche,
**gekennzeichnet durch**
eine zwischen Ober- und Unterteil (3, 4) angeordnete Luftfeder mit einem Hauptvolumen und einem zu- oder abschaltbaren Zusatzvolumen.
